# EUROPEAN PATENT APPLICATION

(11) **EP 0 781 061 A2**
(43) Date of publication of application: **25.06.1997**
(21) Application number: 96118784.6
(22) Date of filing: 22.11.1996
(51) Int. Cl.: H04Q 7/22, H04Q 7/38, H04Q 7/32, H04M 3/42

(54) **Devices, systems and methods for associating a party with a terminal in an intelligent communication system**

(30) Priority: 21.12.1995 US 576430
(71) Applicant: AT&T Corp., New York, NY 10013-2412 (US)
(72) Inventor: Isenberg, David Saul, Westfield, New Jersey 07090 (US); Aykin, Nuray, Holmdel, New Jersey 07733 (US); Lewis, Steven H., Middletown, New Jersey 07748 (US); Mane, Amir M., Lincroft, New Jersey 07738 (US); Milewski, Allen E., Red Bank, New Jersey 07701 (US); Neal, David Nicholas, Middletown, New Jersey 07748 (US); Roesler, Marina L., Westfield, New Jersey 07090 (US)
(74) Representative: KUHNEN, WACKER & PARTNER

(57) **Abstract**

Portable devices, methods and systems are provided for associating a party with one of a plurality of terminals of a communication system. The communication system includes a plurality of terminals and is operative to selectively provide data links between ones of the terminals. The portable device includes both a conventional memory and processing circuitry. The memory is operative to store a set of records associated with a user of the portable device, the set of records includes identification indicia identifying the user and availability indicia representing the availability of the user to respond to calling signals initiated by a calling terminal of the communication system. The processing circuitry, which is associated with the memory, is operative to (1) broadcast a location signal including the identification and availability indicia and (2) establish a communication link between the portable device and a current terminal, thereby enabling a current calling signal directed to the user to be communicated from the calling terminal through the communication system to the current terminal as a function, at least in part, of the identification and availability indicia.

## Description

### Cross Reference To Related Application

The present application is a continuation-in-part application to United States Patent Application Serial No. 08/533,045, Attorney Docket No. Aykin 1-4-1-3-3-2-2, entitled "Circuits, Systems and Methods for Providing Resource Allocation in a Communication System," which is commonly assigned to the assignee of the present invention. The disclosure of this related Application is incorporated herein by reference.

### Technical Field Of The Invention

The present invention relates generally to the field of telephony, and more particularly, to devices, systems and methods that associate a party with a terminal in an intelligent communication system.

### Background Of The Invention

Modern telecommunications has increased individual "reachability" through continual breakthroughs in, and the emergence of, new communication technologies. It is common place for many of us to have multiple telephones and message pagers that we use to send and receive communications.

The burden of carrying around these multiple communication devices, let alone keeping track of the whereabouts of the same, is often quite arduous, and particularly distracting to business people. Worse, many calls and message pages received are far less important than the task presently undertaken, and therefore amount to nothing more than an unscheduled interruption.

A recent advancement in the industry has been the development of the personal communications assistant ("PCA"). A PCA is a device, possibly a communications terminal, used to enter scheduling information into a suitable communication system, i.e., an intelligent communication system. The scheduling information may include an urgency level associated with an out going call or an availability level associated with a particular party. The availability level indicates the party's availability to receive a call. PCAs are more fully disclosed in United States Patent Application Serial No. 08/533,045, Attorney Docket No. Aykin 1-4-1-3-3-2-2, which was incorporated by reference hereinabove.

The intelligent communication system, in response to the scheduling information, establishes a data link at an optimum time for both the calling and called parties thereby enabling communication therebetween. Unfortunately, many PCAs are not portable. The PCA user may only avail himself to the benefits of this technology while at a particular location, such as at home or the office. If the PCA is portable, the user is required to modify his scheduling information continuously. Modifications may include, for example, entering scheduling information, such as "at the office," "at a pay telephone," "in the car with a wireless telephone," "in the car with a wireless message pager," or the like. Worse, the portable PCA user, may wish to change his availability depending upon whether he is near a pay telephone, in the car, etc. The inability of conventional solutions to integrate the advantages of the PCA into a portable and less obtrusive device is a dominant obstacle to producing cost-effective and more commercially desirable products.

### Summary Of The Invention

Broadly, the present invention is directed to portable devices, methods and communication systems that associate a party with a terminal of a communication system. Communications involves the transmission of voice or data signals between two or more terminals, or nodes, in the communication system. Representative communication media include air, wire, fiber optic cable and the like, and representative communication systems and devices include wired, wireless and video telephony, message pagers, voice mail and e-mail systems, and the like. The present invention provides communication management functionality that requires a minimum of user control. Conversations between users may be enabled automatically and in a manner that chooses one or more optimum communication resources and may avoid unnecessary and annoying interruptions.

A preferred exemplary portable device in accordance with the principles of the present invention may suitably be used with a communication system having a plurality of terminals and which is operative to selectively provide data links between ones of the terminals. The portable device includes a memory and processing circuitry. The memory is operative to store a set of records associated with a user of the portable device, the set of records includes identification indicia identifying the user and availability indicia representing the availability of the user to respond to calling signals initiated by a calling terminal of the communication system. The processing circuitry, which is associated with the memory, is operative to broadcast a location signal including the identification and availability indicia and to establish a communication link between the portable device and a curtent terminal thereby enabling a current calling signal directed to the user to be communicated from the calling terminal to the current terminal as a function of, at least in part, the identification and availability indicia.

In alternate preferred embodiments, (1) the processing circuitry is further operative to rebroadcast the location signal, (2) the portable device further includes an interface, associated with the processing circuitry, operative to broadcast the location signal, (3) the interface is further operative to receive an acknowledgment signal from the current terminal in response to the broadcast location signal, (4) the communication link is a wireless communication channel, (5) the set of data records further includes urgency indicia associated with an outgoing calling signal transmitted from the current terminal to the communication system, (6) the portable device further includes an interface, associated with the processing circuitry, operative to receive a scheduling signal directing the processing circuitry to modify the set of data records as a function of the same, (7) the portable device further including means for indicating reception of the communication signal, and (8) the current terminal is associated with a cradle and the portable device further includes a mating interface, the mating interface couplable the said cradle.

A preferred exemplary method in accordance with the principles of the present invention concerns associating a portable device with a current terminal of a communication system, wherein the communication system includes a plurality of terminals and is operative to selectively provide data links between ones of the terminals. The method includes the steps of: (1) storing a set of records in a memory, the set of records associated with a user of the portable device, the set of records including identification indicia identifying the user and availability indicia representing the availability of the user to respond to calling signals initiated by a calling terminal of the communication system, (2) broadcasting a location signal including the identification and availability indicia, and (3) establishing a communication link between the portable device and the current terminal thereby enabling a current calling signal directed to the user to be communicated from the calling terminal to the current terminal as a function of the identification and availability indicia.

In alternate preferred embodiments, the method further includes the steps of: (1) rebroadcasting the location signal, (2) transmitting an acknowledgment signal between the portable device and the current terminal in response to the broadcast location signal, (3) receiving a scheduling signal, (4) modifying the set of data records in response to the received scheduling signal, (5) storing urgency indicia within said set of data records and associating the same with an outgoing calling signal communicated from the current terminal to the communication system, (6) indicating reception of the current calling signal, and (7) coupling a mating interface associated with the portable device with a cradle associated with the current terminal.

One embodiment for using and/or distributing the present invention is as software. The software embodiment includes a plurality of processing instructions which are stored to a conventional storage medium. The instructions are readable and executable by one or more processing systems having one or more processing circuits. The instructions, upon execution, operate to associate a party with a terminal of a communication system. Preferred storage media include magnetic, optic and semiconductor, as well as suitably arranged combinations of the same.

A preferred exemplary communication system in accordance with the principles of the present invention includes a plurality of terminals, a portable device and means, associated with at least one of the terminals and the portable device, for establishing a communication link between the terminal and the portable device. The terminals are preferably interconnected by an infrastructure, the infrastructure is operative to selectively provide data links between ones of the plurality of terminals. The data links are capable of communicating signals therebetween. The portable device, which is associable with at least one of the plurality of terminals, includes a memory operative to store a set of records associated with a user of the portable device, the set of records including identification indicia and availability indicia. The identification indicia identifies the user and the availability indicia represents the availability of the user to respond to calling signals initiated by a calling terminal of the communication system. The establishing means establishes the communication link to enable a current calling signal directed to the user to be communicated from the calling terminal through the infrastructure to the terminal as a function, at least in part, of the identification and availability indicia.

In alternate preferred embodiments, (1) at least one of the terminals or the portable device is operative to broadcast a location signal, (2) the location signal includes the identification and availability indicator, (3) at least one of the terminals or the portable device is operative to transmit an acknowledgment signal in response to the location signal, (4) at least two of the terminals receive the broadcast location signal and the infrastructure is operative to select one of the two terminals as a function of a heuristic, (5) the portable device further includes an interface operative to receive a scheduling signal, and (6) the portable device further includes circuitry, associated with the memory and the interface, operative to modify the set of data records in response to the received scheduling signal.

An important aspect of any system, and in particular any circuit, in accordance with the principles of the present invention is that the same may suitably be implemented in hardware or firmware, and may be processing system-based.

### Brief Description Of The Drawings

For a more complete understanding of the present invention and the advantages thereof, reference is now made to the following descriptions taken in conjunction with the accompanying drawings in which like numbers designate like parts, and in which:
FIGURE 1 illustrates an exemplary portable device in accordance with the principles of the present invention;
FIGURE 2 illustrates a conceptual block diagram of the portable device of FIGURE 1 in wireless communication with ones of a plurality of terminals of a communication system;
FIGURE 3 illustrates an exemplary mating of the housing of the portable device of FIGURES 1 and 2 and the cradle of FIGURE 2;
FIGURE 4 illustrates a block diagram of one exemplary microprocessing circuit that may suitably be used in conjunction with any of the portable devices of FIGURES 1 to 3;
FIGURE 5 illustrates a block diagram of an exemplary communication system in accordance with the principles of the present invention;
FIGURE 6 illustrates one exemplary storage location that may suitably be configured in a conventional memory;
FIGURE 7 illustrates a flow diagram of an exemplary method for using the portable device of FIGURES 1 through 3 with the exemplary communication system of FIGURE 5, and more particularly for associating a particular party using a portable device in accordance with the present invention with one of a plurality of terminals of the communication system; and
FIGURE 8 illustrates a flow diagram of an exemplary method for communicating a calling signal through the infrastructure of FIGURE 5 in accordance with the principles of the present invention.

### Detailed Description Of The Invention

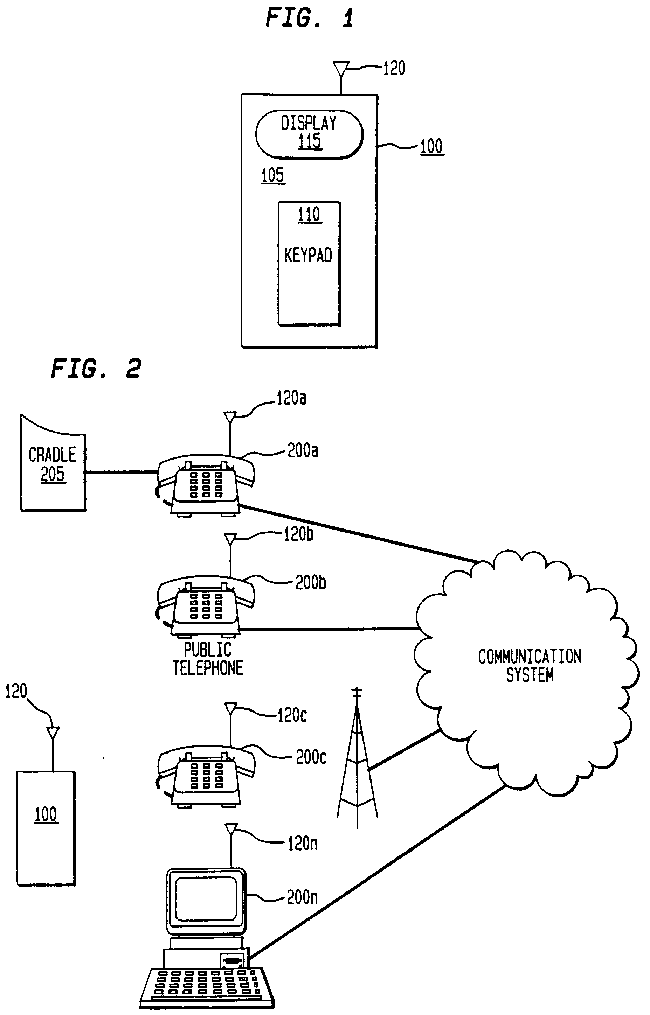

FIGURES 1 and 2 illustrate an exemplary portable device 100 that may suitably operate in accordance with the principles of the present invention. Portable device 100, when in operative communication with one or more of a plurality of terminals of a suitably arranged communication system, is capable of associating its user with at least one terminal. A "portable device," as the phrase is used herein, includes without limitation any movable or transportable electronic or electromechanical apparatus, machine, mechanism or the like in accordance with the present invention. "Terminal," as the term is used herein, includes without limitation any junction, end or connection point, apparatus, node, station or the like that is capable of communicating information in a communication system in accordance with the present invention.

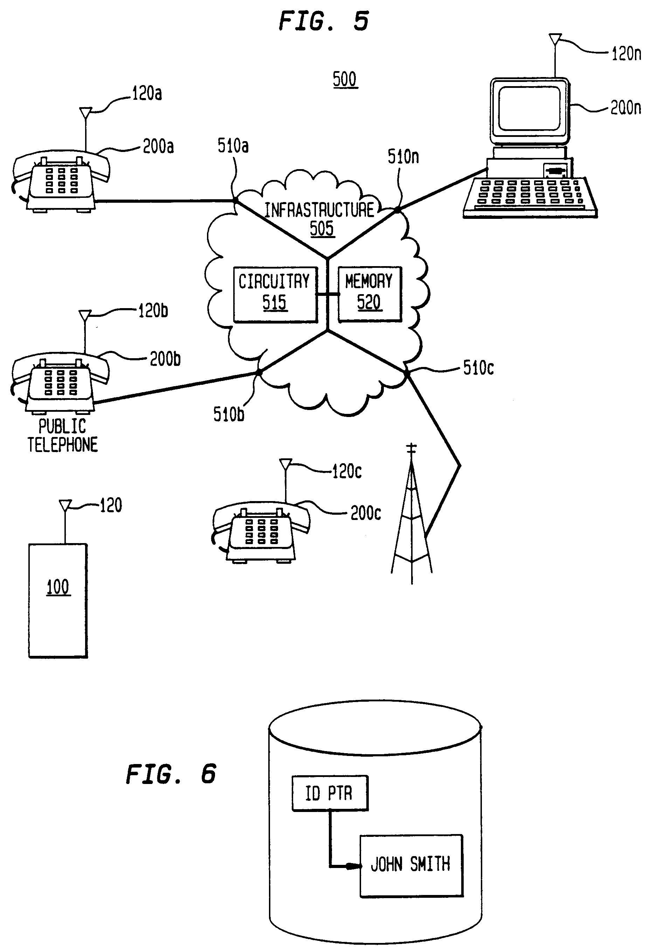

An exemplary communication system in accordance with the present invention is discussed with reference to FIGURES 5 to 7. A "communication system," as the term is used herein, includes without limitation any infrastructure, including all supporting hardware, firmware and software, operative to allow two or more terminals to communicate information therebetween. The communicated information is transferred in the form of signals. The communicated signals may suitably be transmitted in an analog or digital format, and may suitably include voice and data signals, including video information. A "signal," as the term is used herein, includes without limitation a data packet, data frame, sequence of data or any other variation of a physical quantity that may be used to convey information. Conventional communication systems are more fully discussed in The Irwin Handbook of Telecommunications, by James H. Green, Irwin Professional Publishing Co. (2nd ed. 1992), which is incorporated herein by reference.

Turning to FIGURE 1, there is illustrated an exemplary portable device 100 in accordance with the principles of the present invention. Exemplary device 100 includes a housing 105, a keypad 110, a display 115 and an antenna 120. Keypad 110 includes a set of keys or control levers having a systematic arrangement used to operate portable device 100. Display 115 operates to provide an information representation presented in a visible graphical or character form. Through antenna 120, portable device 100 is operative to broadcast or receive one or more location signals to one or more suitably arranged terminals. "Broadcast," as the term is used herein, means to communicate, convey, direct, dispatch, issue, send, telecast, transmit or the like. At least a portion of one of the one or more broadcasted signals identifies the party currently associated with portable device 100.

It should be noted that location signals may suitably be initiated by portable device 100 or, alternatively, portable device 100 may broadcast one or more location signals in response to a first signal received from a suitable communication system, possibly by one or more terminals.

Keypad 110 is also preferably operative to provide an interface through which one or more scheduling signals may suitably be received from the associated party. An "interface," as the term is used herein, includes without limitation any connection or interaction between hardware, firmware or software, and possibly, the associated party. "Scheduling signals," as used herein, include without limitation electromagnetic signals used to select or modify a set of data records. The set of data records may suitably include at least one of identification, availability, urgency, or other indicia. The availability indicia indicates the importance of the activity currently undertaken by the user of portable device 100. In contrast, the urgency indicia indicates the urgency of a particular call initiated by the user.

The foregoing is discussed in greater detail in United States Patent Application Serial No. 08/533,045, Attorney Docket No. Aykin 1-4-1-3-3-2-2, which was incorporated by reference hereinabove. Also disclosed therein is a suitable example of an availability/urgency coding scheme wherein "1" is used for extreme emergencies and "9" is for low level activities, with values therebetween representing varying levels of activity. The development of an appropriate implementation or scheme for scheduling signals is application specific.

An important aspect of the present invention, is that portable device 100 may suitably be implemented in a compact and light embodiment capable of being continuously worn by the user. In alternate embodiments, portable device 100 may suitably be integral to a wireless telephone, message paging device or the like. It should also be noted that device 100 is associated with a suitable portable power supply (not shown).

FIGURE 2 illustrates a conceptual block diagram showing portable device 100 in wireless communication with ones of a plurality of terminals 200a to 200n. "Wireless," as used herein, includes without limitation any transmission via airwaves, such as packet radio, spread spectrum, infrared, cellular, microwave, satellite or the like. Exemplary terminals 200a to 200n illustrate a wired telephone, a public pay telephone, a wireless telephone and a processing system node, respectively. Processing system node 200n may suitably include video telephony. Each one of exemplary terminals 200 is presented for illustrative purposes only, the foregoing group is neither inclusive nor exclusive. Terminals 200a to 200n each include a suitable antenna 120a to 120n, respectively. Antenna 120 of portable device 100 and ones of the antennas 120a to 120n are operative to establish a wireless communication link between portable device 100 and one or more of terminals 200. A "communication link," as used herein, includes without limitation any suitable hardware, firmware or software configuration that enables portable device 100 to communicate with at least one terminal 200.

Recall that a portion of the location signal broadcast between portable device 100 and the one or more terminals 200 identifies the user currently associated with portable device 100. Establishment of the communication link is preferably under the control of at least one of portable device 100 or the one or more terminals 200, and is effectuated as a function of the broadcast location signal. The communication link operates to associate the user with one or more of terminals 200 thereby allowing a signal directed to the party to be communicated from a suitable communication system to one or more of terminals 200.

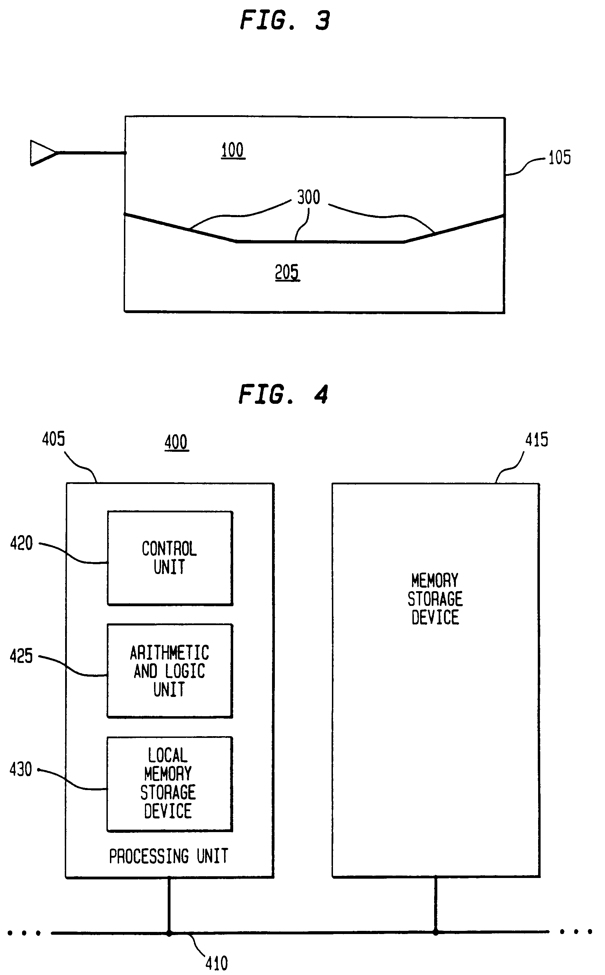

Exemplary terminal 200a is associated with a cradle 205. Cradle 205 is operative to provide a suitable framework or support structure to mate with or receive portable device 100. Turning to FIGURE 3, there is illustrated an exemplary mating interface 300 that is suitably coupled with housing 105 of portable device 100. Exemplary mating interface 300 facilitates - at least one of wired communication or providing a suitable arrangement to charge the power supply associated with portable device 100. A "mating interface," as the term is used herein, includes without limitation plugs, sockets, cables, wires and the like.

FIGURE 4 illustrates a block diagram of one exemplary microprocessing circuit 400 that may suitably be used in conjunction with any of portable devices 100 of FIGURES 1 to 3. Microprocessing circuit 400 includes a single processor 405 coupled via data bus 410 with a single memory storage device 415. Memory storage device 415 is suitably operative to store data or one or more instructions that processor 405 is operative to retrieve and execute. Memory storage device 415 may be any suitable memory storage device or plurality thereof.

Processor 405 includes a control unit 420, an arithmetic and logic unit ("ALU") 425 and a local memory storage device 430 (e.g., stackable cache, a plurality of registers, etc.). Control unit 420 is operative to fetch processing system instructions from memory storage device 415. ALU 425 is operative to perform a plurality of operations, including addition and Boolean AND, needed to carry out those instructions. Local memory storage device 430 is operative to provide local high speed storage used for storing temporary results and control information.

In alternate exemplary embodiments, microprocessing circuit 400 may suitably be replaced by, or combined with, without limitation, programmable logic devices, such as PALs (programmable array logic) and PLAs (programmable logic arrays), DSPs (digital signal processors), FPGAs (field programmable gate arrays), ASICs (application specific integrated circuits), VLSIs (very large scale integrated circuits) or the like.

FIGURE 5 illustrates a block diagram of an exemplary communication system 500 in accordance with the principles of the present invention. System 500 includes an infrastructure 505, portable device 100 and terminals 200a to 200n. Infrastructure 505 is operative to provide one or more data links between ones of terminals 200 for the communication of signals therebetween. "Infrastructure," as the term is used herein, includes without limitation any underlying structure, architecture, design or the like of a communication system, including any hardware, firmware, software, access methods or protocols used, as well as, system control for connectivity with other communication systems or networks. "Data link," as used herein, includes without limitation any suitable hardware, firmware or software configuration that enables two or more terminals 200 to communicate, such as a wired or wireless communication channel, for example.

Infrastructure 505 includes without limitation a plurality of interfaces, or input ports, 510a to 510n, circuitry 515 and at least one memory 520. Interfaces 510 are operative to transmit and receive signals between their associated terminals and at least one of circuitry 515 and memory 520. Circuitry 515 and memory 520 are preferably operative to provide intelligent communication, and more particularly, communication session scheduling as is described in United States Patent Application Serial No. 08/533,045, Attorney Docket No. Aykin 1-4-1-3-3-2-2. As set forth therein, circuitry 515 is operative to establish a data link between two or more terminals. The data link is established as a function of urgency indicia associated with a particular calling signal from a calling terminal 200 to a called terminal 200. In a preferred embodiment, if the associated urgency indicia equals or exceeds availability indicia associated with the party associated with the called terminal, circuitry 515 establishes a data link therebetween. Establishment of the data link allows the coupled terminals 200 to suitably transmit voice or data signals therebetween.

Alternatively, if the urgency indicia of the calling signal is less than the associated availability indicia, indicating that the called terminal 200 is unavailable, then circuitry 515 is operative to defer response to the calling signal until an optimum time. The caller may suitably be given an option to leave a message with a voice mail, e-mail system or message paging system, respectively. In a preferred embodiment, when the party associated with the called terminal 200 becomes available, either infrastructure 505 or the called terminal may suitably be operative to transmit a responsive calling signal to the calling terminal. At least a portion of the responsive calling signal is associated with urgency indicia, i.e., the urgency with which the responsive call must be responded to by the first terminal 200. plurality of processing systems. The processing systems may suitably be in operative communication with one another via a communication network. A "processing system," as the term is used herein, includes without limitation videophones, telephones, televisions, sophisticated calculators and, hand-held, lap top/notebook, personal, mini, mainframe and super computers, as well as within processing system network combinations of the foregoing and conventional communication switches. Conventional processing system architecture is more fully discussed in Computer Organization and Architecture, by William Stallings, MacMillan Publishing Co. (3rd ed. 1993), which is incorporated herein by reference.

Circuitry 515, as well as any processing system, may suitably be combined with or replaced by, without limitation, programmable logic devices, as discussed with reference to FIGURE 4. Particular terminals may suitably be combined with or coupled with a single processing system, or with a plurality of processing systems. Similarly, each processing system may suitably be coupled with a single terminal or a plurality of terminals, such as a public switched telephone network ("PSTN") switching office, for example.

Device 100, as described with reference to FIGURES 1 through 3, may suitably be associated with one or more of terminals 200. Device 100 preferably includes a memory, such as at least one of memory storage device 415 or local memory storage device 430, for example. The memory is operative to store identification indicia associating a user with device 100. Turning momentarily to FIGURE 6, there is illustrated one exemplary storage location that may suitably be configured with in a conventional memory.

Recall that the party using device 100 is associated with at least one terminal 200 through the establishment of a communication link between device 100 and the one or more terminals 200. Recall further, that the communication link is established as a function of a broadcast location signal, and that the broadcast location signal includes at least identification and availability indicia. At least one of the one or more associated terminals 200 is operative to transmit the same to infrastructure 505. Infrastructure 505 uses the identification indicia to identify the user associated with device 100, and the availability indicia to associate device 100 with one or more of terminals 200. In the illustrated embodiment, this may suitably be accomplished by modifying one or more associated records in memory 520. Infrastructure 505 preferably enables a calling signal directed to the user of device 100 to be routed automatically from a calling terminal 200 to one or more of the associated terminals 200.

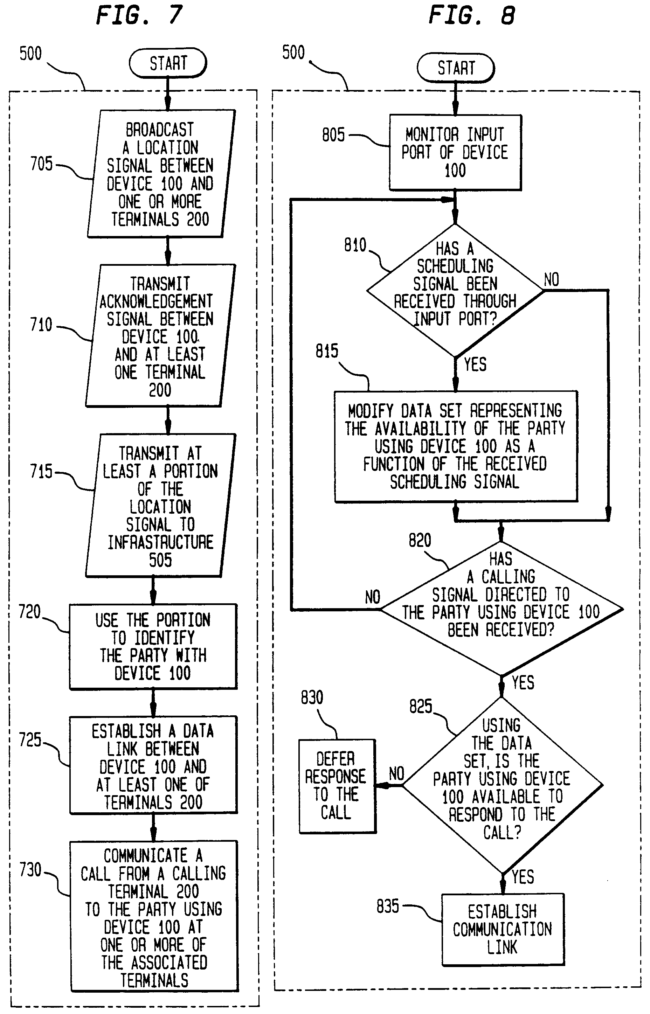

FIGURE 7 illustrates a flow diagram of an exemplary method for operating communication system 500, and more particularly for associating a particular party using portable device 100 with one or more terminals 200 of communication system 500. Each terminal 200 is preferably operative to communicate with one or more other terminals 200 via communication system 500. For illustrative purposes, the flow diagram of FIGURE 7 is discussed with reference to FIGURE 5.

At least one location signal is broadcast between device 100 and one or more terminals 200 (input/output block 705). The one or more location signals may suitably be initiated by device 100 or, alternatively, device 100 may broadcast the one or more location signals in response to a first signal received from one or more terminals 200. It should be noted that any suitable conventional means may be used to transmit signals between device 100 and ones of terminals 200.

If device 100 initiates the broadcast or, alternatively, upon the expiration of a suitable time period, device 100 may suitably operate to rebroadcast the location signal. An acknowledgment signal is preferably transmitted between device 100 and at least one terminal 200 in response to the location signal broadcast therebetween (input/output block 710). At least one of the one or more terminals 200 that received the broadcast location signal is operative to transmit at least a portion of the same to infrastructure 505 (input/output block 715). Infrastructure 505 uses the portion to identify the party using device 100 (process block 720).

A communication link is established between device 100 and at least one terminal 200 as a function of the broadcast location signal thereby associating the user of device 100 with at least one terminal 200 (process block 725). In the event infrastructure 505 receives a calling signal that is directed to the user of device 100, infrastructure 505 is operative to enable the calling signal to be communicated from a calling terminal 200 to the one or more terminals with which the party using device 100 is now associated (process block 730). Infrastructure 505 therefore enables a calling signal directed to the party to be routed automatically from a calling terminal to one or more of the associated terminals 200.

It should be noted that the communication link is preferably monitored to determine if the party using device 100 has moved away from the one or more terminals with which he is associated. In alternate embodiments, this monitoring feature may suitably be suspended if device 100 is cradled, such as in cradle 205.

FIGURE 8 illustrates a flow diagram of an exemplary method for communicating a calling signal through infrastructure 505 in accordance with the present invention. Preferably, at least one of portable device 100 or infrastructure 505 is operative to store a set of data records including identification indicia and availability indicia associated with the party using device 100.

An input port or other interface, such as keypad 110, of device 100 is monitored (process block 805). A determination is made as to whether a scheduling signal was received through the input port (decisional block 810). In the event that a scheduling signal has been received, at least one of portable device 100 or infrastructure 505 is operative to modify the set of data records in response to the received scheduling signal (decisional block 815).

In the event that a calling signal directed to the party using device 100 is received (YES branch of decisional block 820), infrastructure 505 is operative to determine if the party is available to respond to the call (decisional block 825). Preferably, the calling signal includes urgency indicia, however, if it does not, either a default value is associated with the calling signal or the caller is prompted to indicate an urgency level.

The urgency indicia, or indicator, is suitably compared with the data representing the party's availability, and in response thereto either defers response to the call (process block 830) or establishes a data link thereby enabling the calling signal to be communicated from the calling terminal to at least one terminal with which the party using device 100 is presently associated (process block 835).

Although the present invention and its advantages have been described in detail, it should be understood that various changes, substitutions and alterations can be made herein without departing from the spirit and scope of the invention. Specifically, the principles of the present invention are particularly well suited for implementation in accordance with emerging communication technologies

## Claims

1. A portable device for use with a communication system, said communication system including a plurality of terminals and operative to selectively provide data links between ones of said plurality of terminals, said portable device comprising:
a memory operative to store a set of records associated with a user of said portable device, said set of records including identification indicia identifying said user of said portable device; and
CHARACTERIZED BY:
availability indicia representing the availability of said user of said portable device to respond to calling signals initiated by a calling terminal of said communication system; and
processing circuitry, associated with said memory, operative to broadcast a location signal including said identification indicia and said availability indicia, and to establish a communication link between said portable device and a current terminal thereby enabling a current calling signal directed to said user to be communicated from said calling terminal to said current terminal as a function of said identification indicia and said availability indicia.

2. The portable device as set forth in claim 1 wherein said processing circuitry is further operative to rebroadcast said location signal.

3. The portable device as set forth in claim 1 further comprising an interface, associated with said processing circuitry, operative to broadcast said location signal.

4. The portable device as set forth in claim 3 wherein said interface is further operative to receive an acknowledgment signal from said current terminal in response to said broadcast location signal.

5. The portable device as set forth in claim 1 wherein said communication link is a wireless communication channel.

6. The portable device as set forth in claim 1 wherein said set of data records further includes urgency indicia associated with an outgoing calling signal transmitted from said current terminal to said communication system.

7. The portable device as set forth in claim 6 further comprising an interface, associated with said processing circuitry, operative to receive a scheduling signal directing said processing circuitry to modify said set of data records as a function of said scheduling signal.

8. The portable device as set forth in claim 1 further comprising means for indicating reception of said communication signal.

9. The portable device as set forth in claim 1 wherein said current terminal is associated with a cradle and said portable device further comprises a mating interface, said mating interface couplable with said cradle.

10. A method for associating a portable device with a current terminal of a communication system, said communication system including a plurality of terminals and operative to selectively provide data links between ones of said plurality of terminals, said method comprising the steps of:
storing a set of records in a memory, said set of records associated with a user of said portable device, said set of records including identification indicia identifying said user of said portable device; and
CHARACTERIZED BY:
availability indicia representing the availability of said user of said portable device to respond to calling signals initiated by a calling terminal of said communication system;
broadcasting a location signal including said identification indicia and said availability indicia; and
establishing a communication link between said portable device and said current terminal thereby enabling a current calling signal directed to said user to be communicated from said calling terminal to said current terminal as a function of said identification indicia and said availability indicia.

11. The method as set forth in claim 10 further comprising the step of rebroadcasting said location signal.

12. The method as set forth in claim 10 further comprising the step of transmitting an acknowledgment signal between said portable device and said current terminal in response to said broadcast location signal.

13. The method as set forth in claim 10 further comprising the step of receiving a scheduling signal.

14. The method as set forth in claim 13 further comprising the step of modifying said set of data in response to said received scheduling signal.

15. The method as set forth in claim 10 wherein said set of data records further including urgency indicia, said method further comprising the step of associating said urgency indicia with an outgoing calling signal communicated from said current terminal to said communication system.

16. The method as set forth in claim 10 further comprising the step of indicating reception of said current calling signal.

17. The method as set forth in claim 10 wherein said current terminal is associated with a cradle and said portable device includes a mating interface, said method further comprising the step of coupling said mating interface with said cradle.
